# EUROPEAN PATENT APPLICATION

(11) **EP 4 631 484 A1**
(43) Date of publication of application: **15.10.2025**
(21) Application number: 23900794.1
(22) Date of filing: 08.06.2023
(51) Int. Cl.: A61H 1/02, B25J 9/00, B25J 9/12

(54) **LOWER-BODY BRACE ASSEMBLY OF WEARABLE ROBOT, AND WEARABLE ROBOT EQUIPPED WITH SAME**

(30) Priority: 07.12.2022 KR 20220170016
(71) Applicant: Angel Robotics Co., Ltd., Seoul 05116 (KR)
(72) Inventor: KONG, Kyoung Chul, Seoul 08750 (KR); NA, Byeong Hun, Seoul 04109 (KR); LEE, In Jae, Seoul 04072 (KR)
(74) Representative: advotec.
(86) International application number: PCT/KR2023/007813
(87) International publication number: WO 2024/122772

(57) **Abstract**

The present invention relates to a lower limb auxiliary assembly of a wearable robot, and a wearable robot equipped with same. In an exoskeleton robot having a driver mounted on a knee joint, a lower limb auxiliary assembly is provided with a coil spring-equipped damping unit below the knee joint to absorb impact transmitted via same and provide flexibility, and to provide freedoms of movement similar to those of the knee joints of the body of the wearer, thereby minimizing pain, discomfort, or feelings of strangeness in the wearer due to the exoskeleton robot.

## Description

### [Technical Field]

The present invention relates to a lower limb auxiliary assembly of a wearable robot, and a wearable robot including the same. More specifically, the present invention relates to a lower limb auxiliary assembly of a wearable robot, which is capable of absorbing impact transmitted through a knee joint and provide flexibility even in an exoskeleton robot having a driver mounted on a knee joint, and a wearable robot including the same.

### [Background Art]

Recently, development of a wearable robot for a disabled person, patient, or elderly person having a physical ability making daily life impossible, or an industrial or military wearable robot for strengthening physical strength or physical ability, is being carried out.

In case of the wearable robot for the disabled person, patient, or elderly person, it may be classified into a wearable robot for a completely paralyzed disabled person and a wearable robot for an elderly person, partially paralyzed patient, or disabled person, according to physical ability, the magnitude of required assistive force, or the role.

In case of such a wearable robot, it is mainly configured to include a main body mounted on the back of a wearer, in which a battery and a controller are provided, a joint driver mounted on a hip joint and a knee joint to drive each joint, and a support unit connected to each of the joint drivers to support the upper leg or lower leg of the wearer.

In case of a wearable robot having an exoskeleton structure, a knee joint driver is provided at the knee joint, and a structure that connects an upper leg link and a lower leg link is general. The knee joint driver is provided in a knee joint region of a human body, and although flexion-extension movement is permitted through a rotation shaft of a driving motor, in case of the knee joint of the human body, slight twisting or the like is also possible in addition to flexion-extension movement, thereby providing flexibility. Therefore, the wearer of the wearable robot may feel discomfort or pain due to the restriction of freedoms of movement of the knee joint of the wearable robot.

Further, in case of the exoskeleton robot, since a main body including a metal frame, a driver, and a battery is provided, the weight thereof is large, and a structure for alleviating or absorbing impact does not exist. During walking of the wearer wearing the wearable robot, impact or vibration transmitted from the ground through the lower leg may be transmitted to the knee joint, hip joint, and entire body of the wearer through various links, drivers, frames, and the like.

When a specific link or the like is formed of a flexible material to alleviate or absorb vibration and impact transmitted to the wearer, it may be difficult to transmit driving force and achieve accurate control.

Accordingly, there is a great demand for a new lower limb structure of a wearable robot having an exoskeleton structure, which is capable of providing flexibility and absorb or alleviate impact and vibration transmitted from the ground, and a lower limb auxiliary assembly of the wearable robot including the same.

### [Disclosure]

### [Technical Problem]

The present invention is directed to providing a lower limb auxiliary assembly of a wearable robot, which is capable of absorbing impact transmitted from the ground through a knee joint via a link or the like that constitutes a support structure of the lower body of the wearable robot in an exoskeleton robot and providing flexibility in a knee joint region.

### [Technical Solution]

To achieve the aforementioned object, the present invention is directed to providing a lower limb auxiliary assembly of a wearable robot, including: an upper leg unit mounted on an outer side of a wearer's upper leg to assist movement of the wearer's upper leg; a knee joint driver mounted at the other end of the upper leg unit; a lower leg unit mounted on an outer side of a wearer's lower leg, mounted on the knee joint driver side to assist movement of the wearer's lower leg; and a damping unit connecting the knee joint driver and the lower leg unit, and configured to buffer impact transmitted through the lower leg unit.

In addition, a lower end of the upper leg unit may be obliquely mounted on the knee joint driver so as to diverge outward toward a wearer's pelvis direction.

Further, an inclination angle of the upper leg unit with respect to the knee joint driver may be 2 to 8 degrees.

Here, the knee joint driver may include: a driving motor; a driving motor mounting member in which the driving motor is inserted and mounted; and at least one driving member fastened to an output end of the driving motor exposed to at least one side surface of the driving motor and rotating.

In this case, the lower limb auxiliary assembly of the wearable robot may further include: an upper mounting member connecting a lower end of an upper leg link constituting the upper leg unit and the driving motor mounting member of the knee joint driver, in which the lower end of the upper leg link may be obliquely fastened to the upper mounting member.

In addition, the upper mounting member may include: a link insertion portion inserted into an inner side of a lower end of an upper leg link of the upper leg unit; a housing fastening portion fastened to an upper surface of a housing of the driving motor; and a connection plate portion provided with the link insertion portion and the housing fastening portion on upper and lower surfaces thereof respectively, and having a thickness gradually decreasing outward, so that the upper leg unit is inclined with respect to the knee joint driver.

Further, the link insertion portion inserted into the inner side of the lower end of the upper leg link of the upper leg unit, provided on an upper surface of the connection plate portion, may be provided at an eccentrically outward position.

Here, the damping unit may further include: a plurality of coil springs disposed in front-rear directions; an upper plate member configured to support upper ends of the plurality of coil springs and coupled to the driving member; and a frame member configured to support lower ends of the plurality of coil springs and mounted on the lower leg unit side.

In addition, the frame member may accommodate the upper plate member to prevent upward separation of the upper plate member, and have an opening formed to open upward, and both end portions of the opening may be formed in a shape preventing separation of an upper surface edge of the upper plate member.

Further, at least one stopper may be provided on at least one side surface of the driving motor of the knee joint driver, and at least one engagement portion, engaging with the stopper according to a rotation angle of the driving member to limit rotation of the driving member, may be provided on the driving member.

Here, the stopper may be provided at two positions on a side surface of the driving motor, and the engagement portions may be respectively provided on an outer circumferential surface and an inner circumferential surface of the driving member.

In this case, one of the stoppers may be configured as a stopping block made of metal material, and the other stopper may be configured as a stopping member made of soft material.

In addition, the engagement portion may include: an engagement block mounted on the driving member; and a gas damper mounted on the engagement block, in which a support end of the gas damper may be supported by the stopper.

Further, the lower limb auxiliary assembly of the wearable robot may further include: a hip joint driver mounted on an upper end of the upper leg unit to rotationally drive the upper leg unit; and a foot unit mounted on a lower end of the lower leg unit to support a wearer's foot.

In addition, to achieve the aforementioned object, the present invention is directed to providing a wearable robot, including: a pair of lower limb auxiliary assemblies; and a pair of pelvic units, on which the pair of lower limb brace assemblies are respectively mounted, the pelvic units being mounted to surround a wearer's waist region, and extending to a wearer's lateral hip joint region.

### [Advantageous Effects]

According to the lower limb auxiliary assembly of a wearable robot and the wearable robot including the same according to the present invention, a coil spring-equipped damping unit is provided below a knee joint, so that impact and vibration transmitted to a thigh link or an upper body through the knee joint may be alleviated.

In addition, according to the lower limb auxiliary assembly of a wearable robot and the wearable robot including the same according to the present invention, freedoms of movement similar to those of a knee joint of a human body may be provided to a knee joint of a wearer, thereby minimizing feelings of strangeness, pain, or discomfort in the wearer due to the exoskeleton structure robot.

Further, according to the lower limb auxiliary assembly of a wearable robot and the wearable robot including the same according to the present invention, by disposing a plurality of coil springs in a front-rear direction inside a damping unit, a knee joint of a wearer may be stably supported while minimizing a thickness in a width direction of a knee joint region.

### [Description of Drawings]

FIG. 1 illustrates a perspective view of a wearable robot to which a lower limb auxiliary assembly of a wearable robot according to the present invention is applied.
FIGS. 2A and 2B illustrate a perspective view and a front view of a lower limb auxiliary assembly of a wearable robot according to the present invention.
FIG. 3 illustrates a perspective view of a knee joint structure including a knee joint driver and a damping unit of a lower limb auxiliary assembly of a wearable robot according to the present invention.
FIG. 4 illustrates an exploded perspective view of the knee joint structure illustrated in FIG. 3.
FIG. 5 illustrates a front view of a state in which impact is damped by a damping unit in the knee joint structure illustrated in FIG. 3.
FIG. 6 illustrates a side view of a state in which impact is damped by a damping unit in the knee joint structure illustrated in FIG. 3.
FIGS. 7 and 8 illustrate a stopper for limiting a rotation angle of a knee joint driver of a lower limb auxiliary assembly of a wearable robot according to the present invention, and a state of bidirectional rotation limitation by the stopper.

### [Mode for Disclosure]

Hereinafter, exemplary embodiments of the present invention will be described in detail with reference to the accompanying drawings. However, the present invention is not limited to the exemplary embodiments to be described below and may be specified as other aspects. On the contrary, the embodiments introduced herein are provided to make the disclosed content thorough and complete, and sufficiently transfer the spirit of the present invention to those skilled in the art. Like reference numerals indicate like constituent elements throughout the specification.

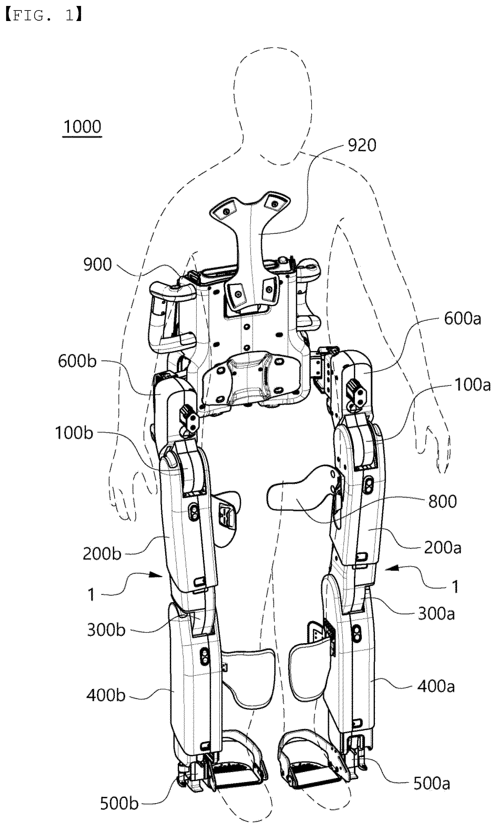

FIG. 1 illustrates a perspective view of a wearable robot 1000 to which a lower limb auxiliary assembly 1 of a wearable robot 1000 according to the present invention is applied.

With reference to FIG. 1, in the present specification, the wearable robot 1000 may be a robot worn on a lower body of a disabled person, elderly person, or patient (hereinafter referred to as a "wearer") to assist in a walking motion. Here, the meaning of assisting in a walking motion refers to providing driving force to compensate for insufficient muscle strength at a hip joint and a knee joint, to enable independent walking of the wearer who retains partial lower-limb motor function.

A wearable robot 1000 to which a lower limb auxiliary assembly 1 of a wearable robot according to the present invention is applied may basically include: a main body unit 900 including a controller for providing a control signal and a battery for supplying power; a pelvic unit 600a and 600b, to a rear portion of which the main body unit is mounted, mounted to surround a waist region of a wearer, and extending to a lateral hip joint region of the wearer; a pair of hip joint drivers 100a and 100b mounted to both ends of the pelvic unit 600a and 600b extending to the lateral hip joint region of the wearer;
a pair of upper leg units 200a and 200b driven by the hip joint drivers, and providing rotational assistive force to upper legs of the wearer; a pair of knee joint drivers 300a and 300b mounted to ends of the upper leg units 200; a lower leg unit 400a and 400b driven by the knee joint driver 300, and providing rotational assistive force to upper legs of the wearer; and a pair of foot units 500a and 500b mounted to ends of the lower leg units 400, and supporting feet of the wearer.

The wearable robot 1000 illustrated in FIG. 1 may be configured in the form of an exoskeleton robot, and may be configured in a structure that supports both lower limbs of a wearer by including a pair of lower limb brace assemblies 1.

In addition, in case of the lower limb auxiliary assembly 1 of the wearable robot 1000 according to the present invention, in order to absorb impact from the ground and ensure freedoms of movement of a knee joint, a damping unit 700, which connects the knee joint driver 300 and the lower leg unit 400 and buffers impact transmitted through the lower leg unit 400, may be provided in each of the lower limb brace assemblies 1.

A detailed description of the damping unit 700 will be given below.

The wearable robot 1000 may include the main body unit 900 disposed at a rear portion of a back panel of a wearer, and the pair of lower limb brace assemblies 1 extending downward from the main body unit 900 to support respective legs of the wearer. Each of the lower limb brace assemblies 1 and the main body unit 900 may be connected via the pelvic units 600a and 600b.

The pelvic units 600a and 600b may be configured such that the main body unit 900 is mounted to a rear portion of the pelvic units 600a and 600b, the pelvic units 600a and 600b are mounted to surround a waist region of a wearer, and may extend to lateral hip joint regions of the wearer, and hip joint drivers 100a and 100b may be mounted to lower portions of both ends of the pelvic units 600a and 600b extending to the lateral hip joint regions, thereby providing hip joint assistive force or assistive torque.

Here, in hip joint and knee joint corresponding regions of each of the lower limb brace assemblies 1, a driving device for providing driving torque may be provided. Each of the driving devices may be configured as a joint driver including a driving motor 310.

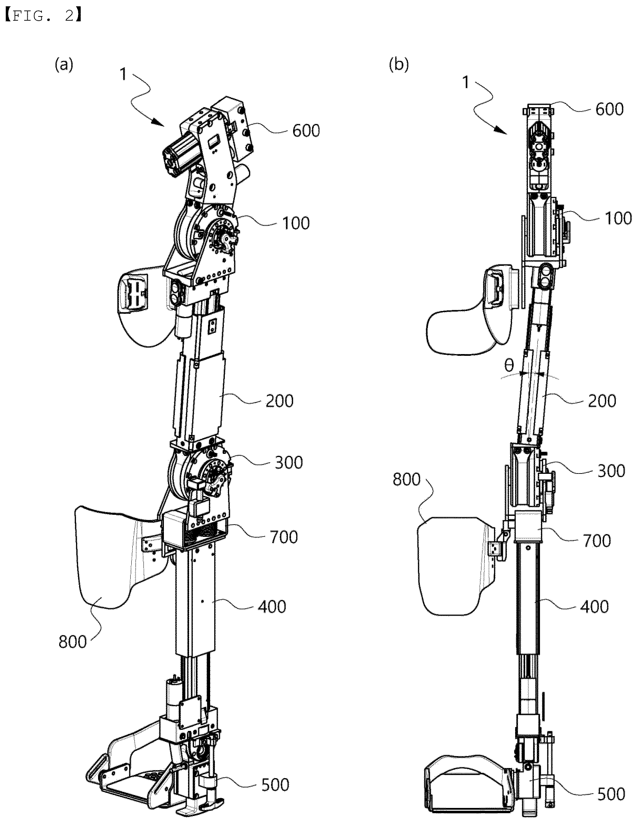

Each of the lower limb brace assemblies 1 may include:
a hip joint driver 100; an upper leg unit 200 that is connected to the hip joint driver 100, and mounted on an outer side of an upper leg of a wearer to support or assist the upper leg of the wearer; a knee joint driver 300 that is connected to a lower end of the upper leg unit 200; a damping unit 700 (see FIGS. 2A and 2B and subsequent drawings) that connects the knee joint driver 300 and a lower leg unit 400, and is provided to buffer impact transmitted through the lower leg unit 400; a lower leg unit 400 connected to the damping unit 700, and mounted on an outer side of a lower leg of the wearer to support or assist the lower leg of the wearer; and a foot unit 500 connected to a lower end of the lower leg unit 400, and supporting a foot of the wearer.

As illustrated in FIG. 1, the joint drivers 100 and 300 may be respectively installed in hip joint and knee joint regions of the wearer, such that the hip joint driver 100 is installed at a region where a pelvis and an upper leg meet, and the knee joint driver 300 is installed at a knee region at a boundary between the upper leg and the lower leg. Although in the wearable robot 1000 illustrated in FIGS. 1 and 2, an example is illustrated in which the joint driver 100 is provided only at a hip joint and a knee joint of a wearer, a separate driving device may be additionally provided at an ankle joint, if necessary.

In addition, at each of the upper leg units 200 and the lower leg units 400, at least one wearing unit 800 for fixing upper legs and lower legs of a wearer to the upper leg units 200 and the lower leg units 400 may be provided, and driving force provided from each joint driver 100 is ultimately transmitted to upper legs or lower legs of the wearer through the wearing unit 800, thereby assisting in walking of the wearer. A separate suit, belt, or band (not illustrated), etc. may be connected to the wearing unit 800 and a back support unit 920 mounted to a front side of the main body, thereby enabling the wearer to wear the wearable robot 1000 and allowing the driving force of the joint driver to be transmitted.

As illustrated in FIG. 1, the pair of lower limb brace assemblies 1 are respectively disposed along sides of the wearer, and the main body unit 900 described above is disposed at a rear portion of a back panel of an upper body of the wearer, so the main body unit is mounted at a rear side through the pelvic units 600a and 600b, the pelvic units 600a and 600b are mounted to surround a waist region or a hip joint region of the wearer, and both ends of the pelvic units 600a and 600b may be configured to extend to lateral hip joint regions of the wearer.

As described above, in such a wearable robot 1000, the knee joint driver 300 is provided in a knee joint region of a human body, and allows rotation of flexion or extension through a rotation shaft of the driving motor 310, but in case of a human knee joint, in addition to axial rotation of flexion and extension, slight torsion and the like are possible. However, the lower limb auxiliary assembly 1 of the wearable robot 1000 does not provide all such degrees of freedom, and accordingly, during walking, a wearer may feel discomfort or pain depending on a physical disability or gait habit of the wearer. In case of an exoskeleton robot, since its own weight is large and there is no separate structure to buffer or absorb impact, during walking, impact or vibration transmitted from the ground through lower legs of a wearer wearing the wearable robot 1000 may be transmitted to knee joints, hip joints, and an entire body of the wearer through various links, drivers, and frames, thereby generating noise and vibration, and possibly causing pain or injury to the wearer.

Accordingly, the present invention, in order to provide flexibility to an exoskeleton-structured wearable robot 1000 and to absorb or alleviate impact and vibration transmitted from the ground, enables impact transmitted through a knee joint to be absorbed and flexibility to be provided by including the damping unit 700 between the knee joint driver 300 and the lower leg unit 400, while also enabling stable walking of the wearer. Hereinafter, a detailed description will be given with reference to FIGS. 2A and 2B and subsequent drawings.

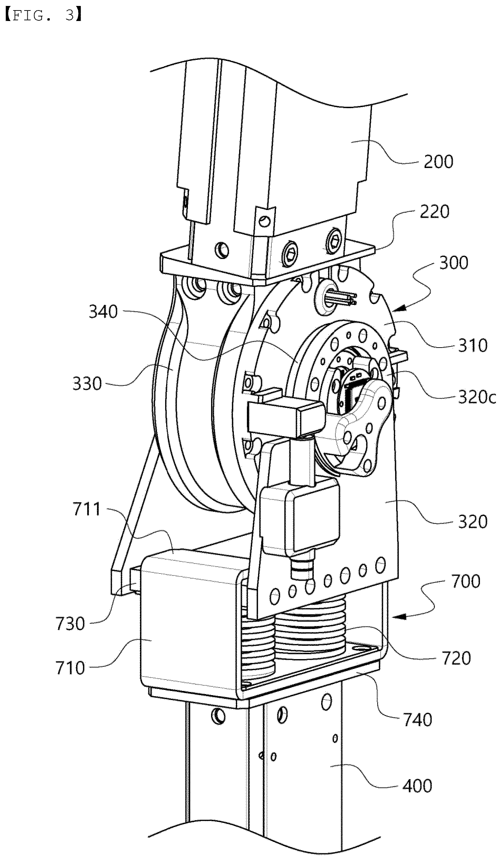

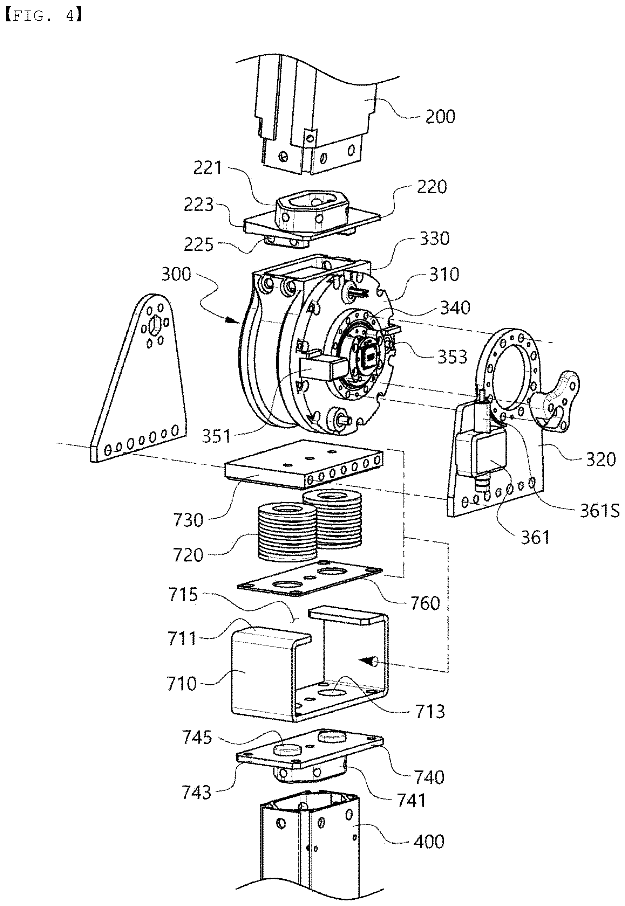

FIGS. 2A and 2B illustrate a perspective view and a front view of the lower limb auxiliary assembly 1 of the wearable robot 1000 according to the present invention, FIG. 3 illustrates a perspective view of a knee joint structure including the knee joint driver 300 and the damping unit 700 of the lower limb auxiliary assembly 1 of the wearable robot 1000 according to the present invention, and FIG. 4 illustrates an exploded perspective view of the knee joint structure illustrated in FIG. 3.

The lower limb auxiliary assembly 1 illustrated in FIGS. 2A and 2B is illustrated in a state in which all cover housings are removed, so that the internal configuration can be easily observed in the completed state of FIG. 1.

The lower limb auxiliary assembly 1 of the wearable robot 1000 according to the present invention illustrated in FIGS. 2A and 2B may include: an upper leg unit 200 mounted on an outer side of an upper leg of a wearer to assist movement of the upper leg of the wearer; a knee joint driver 300 mounted to the other end of the upper leg unit 200; a lower leg unit 400 mounted on a side of the knee joint driver 300 and mounted on an outer side of a lower leg of the wearer to assist movement of the lower leg of the wearer; and a damping unit 700 that connects the knee joint driver 300 and the lower leg unit 400, and buffers impact transmitted through the lower leg unit.

Typically, a width of a pelvic region of a human body is greater than a width of a knee joint or lower leg region, and when such a body characteristic is ignored and an inner width of the lower limb auxiliary assembly 1 is configured entirely in a size corresponding to the pelvic size, the lower leg unit 400 may not closely adhere to the lower leg of the wearer and transmit assistive force through a band member or the like, which reduces stability and may cause unnecessary pain to the lower leg of the wearer.

Accordingly, as illustrated in FIG. 2B, a lower end of the upper leg unit 200 may be obliquely mounted to the knee joint driver 300 so as to diverge outward toward the pelvic direction of the wearer.

Therefore, the lower limb auxiliary assembly 1 according to the present invention may allow for stable support of lower limbs by slightly changing an angle of the upper leg unit 200 connected to a side of the knee joint driver 300, reflecting morphological characteristics of the human body.

Specifically, an inclination angle (θ) of the upper leg unit 200 with respect to the knee joint driver 300, illustrated in FIG. 2B, is preferably configured to be about 2 to 8 degrees.

Further, although each joint driver in FIGS. 2A and 2B is illustrated to be provided with at least one wearing unit 800, each wearing unit 800 may be mounted on the upper leg unit 200 or the lower leg unit 400, and the number thereof may be increased or decreased.

FIG. 3 illustrates a perspective view of a knee joint structure including the knee joint driver 300 and the damping unit 700 of the lower limb auxiliary assembly 1 of the wearable robot 1000 according to the present invention, and FIG. 4 illustrates an exploded perspective view of the knee joint structure illustrated in FIG. 3.

The knee joint driver 300 may include a driving motor 310, a driving motor mounting member 320 into which the driving motor 310 is inserted and mounted, and at least one driving member 330 fastened to a driving motor output end 340 that is exposed to at least one side surface of the driving motor 310 and rotates.

A fastening portion 320c of the driving member 330 is fastened to the driving motor output end 340, and is configured to transmit assistive force or assistive torque to a lower leg link side when the motor rotates, and may have a plate-ring shape corresponding to the driving motor output end 340, and be fastened by a fastening member such as a bolt. A pair of the driving members 330 may be configured to be fastened to both side surfaces of one knee joint driver.

In addition, the upper leg unit 200 may further include an upper mounting member 220 connecting a lower end of an upper leg link constituting the upper leg unit 200 to the driving motor mounting member 320 of the knee joint driver 300, and the lower end of the upper leg link constituting the upper leg unit 200 may be obliquely fastened to the upper mounting member 220.

In order for the lower end of the upper leg link to be obliquely fastened to the upper mounting member 220, the upper mounting member 220 may include: a link insertion portion 221 inserted into an inner side of a lower end of the upper leg link of the upper leg unit 200; a housing fastening portion 225 fastened to an upper surface of a housing of the driving motor 310; and a connection plate portion 223 having the link insertion portion 221 and the housing fastening portion 225 respectively provided at an upper surface and a lower surface thereof, and configured such that a thickness thereof decreases toward an outer side, so that the upper leg unit 200 is inclined with respect to the knee joint driver 300.

That is, instead of applying the method of forming an inclined surface on the upper leg link and the driving motor mounting member 320 by obliquely fastening the lower end of the upper leg link to the upper mounting member 220, the upper mounting member 220 provided with the connection plate portion 223, in which a thickness decreases toward an outer side, is applied between them.

In addition, the lower limb auxiliary assembly according to the present invention may alleviate impact or vibration during walking through a damping unit described below, and may provide various freedoms of movement.

Further, the link insertion portion 221, which is inserted into the inner side of the lower end of the upper leg link of the upper leg unit and is provided on an upper surface of the connection plate portion 223, may be provided at an eccentrically outward position. Specifically, the link insertion portion 221 of the mounting member 220, which is mounted on the upper surface of the driving motor mounting member 320 constituting the knee joint driver 300, is not provided at a center portion of the connection plate portion 223, but is provided in a region where the thickness of the connection plate portion 223 is small, so that impact or vibration transmitted from the ground during walking is primarily buffered by the damping unit 700, and by shifting a central axis of the upper leg unit connected to the knee joint driver, with respect to the knee joint driver, an effect of secondarily alleviating transmission efficiency of vibration or impact may be obtained.

As described above, in order to form an inclination of the upper leg unit 200, it is not necessary to separately design or manufacture a shape of the upper leg link different from that of the lower leg link, or a driving motor mounting member 320 constituting the knee joint driver 300 different from that of the hip joint driver, so manufacturing costs and the like can be reduced.

As illustrated in FIGS. 3 and 4, the damping unit 700 is provided between the knee joint driver 300 and a lower leg link constituting the lower leg unit 400, and the damping unit 700 may be configured to include: a plurality of coil springs 720 disposed in a front-rear direction; an upper plate member 730 that supports upper ends of the plurality of coil springs 720 and is fastened to the driving member 330; and a frame member 710 that supports lower ends of the plurality of coil springs 720 and is mounted on a side of the lower leg unit 400.

The coil springs 720 may be configured to connect the knee joint driver 300 and the lower leg link, absorb impact, and provide freedoms of movement.

In the embodiment illustrated in FIGS. 3 and 4, two coil springs 720 are disposed in a front-rear direction, thereby minimizing a width of the damping unit 700 in a knee joint width direction, while still providing sufficient elastic force for impact absorption and supporting force for connecting and supporting the knee joint driver and the lower leg unit.

The upper plate member 730 is provided on upper portions of the coil springs 720. The upper plate member 730 supports upper ends of the coil springs 720, and is configured such that the driving member 330, which is fastened to the output end 340 of the driving motor 310 that is exposed to a side surface of the driving motor 310, is mounted thereon. The upper plate member 730, through elastic force of the coil springs 720, is configured to interconnect the lower leg link constituting the lower leg unit 400 and the knee joint driver 300.

Further, the damping unit 700 may include a frame member 710 that supports lower ends of the plurality of coil springs 720 and is mounted on a side of the lower leg unit 400, and the frame member 710 accommodates the upper plate member 730 to prevent separation of the upper plate member 730, and has an opening 715 formed to open upward. Both ends of the opening 715 may be configured in a shape that supports an upper surface edge of the upper plate member 730.

The frame member 710 is configured to be fastened to the lower leg link side, the coil springs 720 are mounted inside the frame member 710, and the upper plate member 730 that supports the coil springs 720 is connected to the knee joint driver 300 via the driving member 330.

Accordingly, the damping unit 700 connects the knee joint driver 300 and the lower leg link, in which a core of the connection becomes the coil springs 720, which contract or extend in response to movement of the wearer or external force, and may absorb impact from the ground or provide more diverse freedoms of movement, and the coil spring 720 may itself serve as a connection shaft that directly connects the knee joint driver and the lower leg unit.

The upper plate member 730 of the damping unit 700, according to compression or expansion of the coil springs 720, may have multi-axis degrees of freedom and be capable of movement, but a movement range thereof may be restricted by the frame member 710.

Both end portions 711 of the opening 715 of the frame member 710 may be bent in a shape that supports an upper surface edge of the upper plate member 730, thereby preventing excessive movement or separation of the upper plate member 730.

Accordingly, in case where a wearer wearing the wearable robot is standing upright or during a general walking process, the upper plate member 730, which is supported by the coil spring 720 and fastened to the driving member 330, and the both end portions 711 of the opening 715 of the frame member 710, may be maintained in a non-contact state, and only when deformation or twisting, etc. of the coil spring beyond a normal movement range occurs, the upper plate member 730 may be preferably supported by the both end portions 711 of the opening 715 of the frame member 710, thereby preventing separation.

The frame member 710 may be configured to have an overall square-shaped cross-section, and the opening 715 may be formed at an upper portion, but the shape thereof may be variously modified.

Further, a lower mounting member 740 may be provided at a lower portion of the frame member 710. The lower mounting member 740 may include a link insertion portion 741 that is inserted into an inner upper portion of a lower leg link constituting the lower leg unit, a frame insertion portion 745 that is seated into a fastening hole 713 of the frame member 710, and
a connection plate portion 743 having the link insertion portion 741 and the frame insertion portion 745 respectively on a lower surface and an upper surface thereof. The connection plate portion 743 of the lower mounting member 740 may be configured to have a predetermined thickness.

The link insertion portion 741 may be configured in a protrusion or pillar shape, etc., and may be fastened while being seated in a seating groove or seating hole provided on a lower surface of the frame member 710, thereby improving stability of an assembly state of the damping unit or the coil spring.

In addition, a washer member 760 for preventing fixation or corrosion of the coil spring may be provided between an inner bottom surface of the damping unit 700 and a lower end of the coil spring.

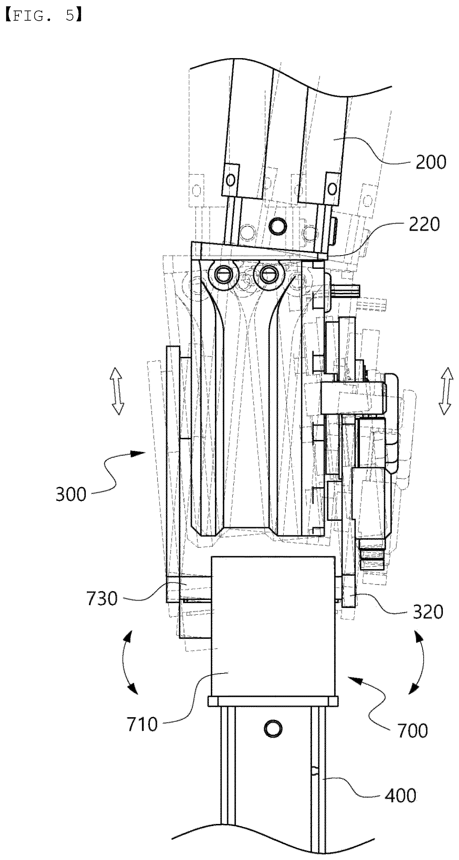

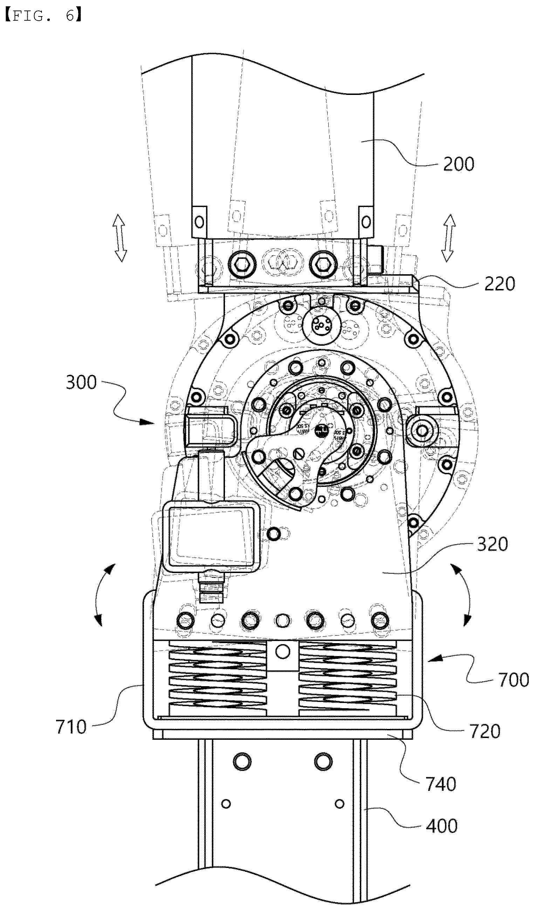

FIG. 5 illustrates a front view of a state in which impact is buffered by the damping unit 700 in the knee joint structure illustrated in FIG. 3, and FIG. 6 illustrates a side view of a state in which impact is buffered by the damping unit 700 in the knee joint structure illustrated in FIG. 3.

As illustrated in FIG. 5 or FIG. 6, when force or torque components in a left-right direction or front-rear direction of a robot wearer are included in impact or vibration transmitted to a knee joint of the robot wearer through a lower leg link, or when movement in the left-right or front-rear direction of the knee joint of the wearer occurs, the damping unit 700 allows the coil springs 720 to be compressed or extended within a movement allowable range of the frame member 710, thereby alleviating impact and allowing movement of the knee joint.

Since such external impact or vibration includes both vertical-direction components and horizontal-direction components, each of the coil springs 720 may function as a shock absorber that buffers the impact or vibration.

In this case, as described above, since compression or extension directions of each coil spring 720 are not fixed, multi-axis degrees of freedom may be provided through the damping unit 700.

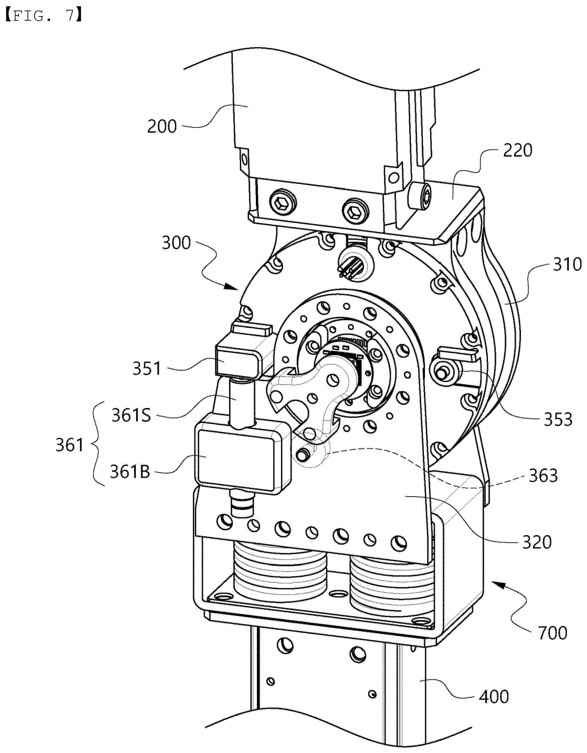

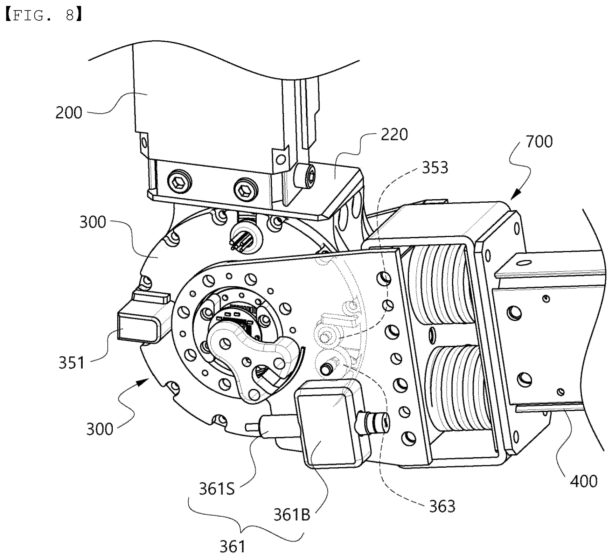

FIGS. 7 and 8 illustrate a stopper for limiting a rotation angle of the knee joint driver 300 of the lower limb auxiliary assembly 1 of the wearable robot 1000 according to the present invention, and a bidirectional damping state by the stopper.

Although the lower limb auxiliary assembly 1 according to the present invention aims to absorb impact or vibration transmitted from the ground during walking through the damping unit 700 in a knee joint region or to provide freedoms of movement of a knee joint structure, when the knee joint driver provides a rotational assistive force or assistive torque beyond a rotation range of a human knee joint, it may cause serious injury.

That is, the human knee joint cannot be further rotated in extension from a standing state, or further flexed beyond a bent state.

To prevent the knee joint driver 300 from providing an assistive torque beyond such a rotation range, stoppers 351 and 353 for physically limiting a rotation angle of the knee joint driver 300 and the damping unit 700 may be provided.

At least one of the stoppers 351 and 353 may be provided on at least one side surface of the driving motor 310 constituting the knee joint driver 300 of the lower limb auxiliary assembly 1 according to the present invention. Engagement portions 361 and 363, which limit rotation of the driving member 330 by catching on the stopper according to a rotation angle of the driving member 330, may be provided on an inner circumferential surface or outer circumferential surface of the driving member 330.

The driving motor 310 constituting the knee joint driver 300 is configured to be fixedly mounted to the driving motor mounting member 320 connected to an upper leg link side, and the driving member 330 constituting the knee joint driver 300 is configured to be mounted to the output end 340 provided on a side surface of the driving motor 310 and rotationally driven.

Ultimately, the stoppers 351 and 353 are provided together on a side surface of the driving motor 310, where the output end 340 of the driving motor 310 is exposed, to limit a rotation range of the driving member 330, and the engagement portions 361 and 363 for limiting the rotation range of the driving member 330 by engaging with the stoppers 351 and 353 may be provided on an outer surface or inner surface of the rotationally driven driving member 330.

In the knee joint driver 300 illustrated in FIG. 7, a stopper (hereinafter referred to as the "extension limit stopper 351 ") provided on an outer surface of the driving member 330 may limit an extension angle of the knee joint, and prevent excessive extension of the knee, and
in FIG. 8, a stopper indicated by dotted lines (hereinafter referred to as the "flexion limit stopper 353") may limit a flexion angle of the knee joint and prevent excessive bending of the knee.

Accordingly, in the lower limb auxiliary assembly 1 according to the present invention, the stoppers 351 and 353 may be provided at two positions on a side surface of the driving motor 310, and the engagement portions 361 and 363 may be respectively provided on an outer circumferential surface and an inner circumferential surface of the driving member 330.

As illustrated in FIGS. 7 and 8, the extension limit stopper 351 and the flexion limit stopper 353 are mounted at approximately 180-degree intervals on the side surface of the driving motor 310, and an extension limit engagement portion 361 corresponding to the extension limit stopper 351 is mounted on an outer surface of the driving member 330, and a flexion limit engagement portion 363 corresponding to the flexion limit stopper 353 may be mounted on an inner surface of the driving member 330.

Although the extension limit stopper 351 and the flexion limit stopper 353 are installed at approximately 180-degree intervals, the actual rotation range of the driving member 330 may be limited to approximately 0 to 100 degrees based on a standing state, depending on positions of the extension limit engagement portion 361 and the flexion limit engagement portion 363, and this may provide a sufficient knee joint rotation range for normal walking.

In addition, one of the stoppers may be configured as a stopping block made of a metal material, and the other stopper may be configured as a stopping member made of a soft material. Specifically, in relation to the knee rotation range, the rotation range of extension movement needs to be more strictly limited than that of flexion movement to prevent injury or pain, so the extension limit stopper 351 may be configured as a metal block, and the flexion limit stopper 353 may be configured as a stopping member made of a material such as urethane.

In contrast, since the flexion limit of the driving member 330 relative to the driving motor 310 by the flexion limit stopper 353 is limited to approximately 100 degrees, and such a rotation range is within a normal flexion range of a knee joint, and is not configured to prevent a large force or impact, the flexion limit stopper 353 and the engagement portion may be made of a flexible material.

Among the engagement portions, the extension limit engagement portion 361 includes an engagement block 361B mounted to the driving member 330, and a gas damper 361S mounted to the engagement block 361B, and a support end of the gas damper 361S is configured to be supported by the extension limit stopper 351, thereby allowing the knee joint, even when fully extended such that the stopper and the engagement portion contact each other, to provide smooth operation feel and a stable rotation range limiting function.

While the present specification has been described above with reference to the exemplary embodiments of the present invention, it may be understood by those skilled in the art that the present invention may be variously modified and changed without departing from the spirit and scope of the present invention disclosed in the claims. Therefore, it should be understood that any modified embodiment that essentially includes the constituent elements of the claims of the present invention is included in the technical scope of the present invention.

## Claims

1. A lower limb auxiliary assembly of a wearable robot, comprising:
an upper leg unit mounted on an outer side of a wearer's upper leg to assist movement of the wearer's upper leg;
a knee joint driver mounted at the other end of the upper leg unit;
a lower leg unit mounted on an outer side of a wearer's lower leg, mounted on the knee joint driver side to assist movement of the wearer's lower leg; and
a damping unit connecting the knee joint driver and the lower leg unit and configured to buffer impact transmitted through the lower leg unit.

2. The lower limb auxiliary assembly of the wearable robot of claim 1, wherein a lower end of the upper leg unit is obliquely mounted on the knee joint driver so as to diverge outward toward a wearer's pelvis direction.

3. The lower limb auxiliary assembly of the wearable robot of claim 2, wherein an inclination angle of the upper leg unit with respect to the knee joint driver is 2 to 8 degrees.

4. The lower limb auxiliary assembly of the wearable robot of claim 2, wherein the knee joint driver comprises:
a driving motor;
a driving motor mounting member in which the driving motor is inserted and mounted; and
at least one driving member fastened to an output end of the driving motor exposed to at least one side surface of the driving motor and rotating.

5. The lower limb auxiliary assembly of the wearable robot of claim 4, wherein the upper leg unit further comprises:
an upper mounting member connecting a lower end of an upper leg link constituting the upper leg unit and the driving motor mounting member of the knee joint driver,
wherein the lower end of the upper leg link is obliquely fastened to the upper mounting member.

6. The lower limb auxiliary assembly of the wearable robot of claim 4, wherein the upper mounting member comprises:
a link insertion portion inserted into an inner side of a lower end of an upper leg link of the upper leg unit;
a housing fastening portion fastened to an upper surface of a housing of the driving motor; and
a connection plate portion provided with the link insertion portion and the housing fastening portion on upper and lower surfaces thereof respectively, and having a thickness gradually decreasing outward, so that the upper leg unit is inclined with respect to the knee joint driver.

7. The lower limb auxiliary assembly of the wearable robot of claim 6, wherein the link insertion portion inserted into the inner side of the lower end of the upper leg link of the upper leg unit, provided on an upper surface of the connection plate portion, is provided at an eccentrically outward position.

8. The lower limb auxiliary assembly of the wearable robot of claim 1, wherein the damping unit further comprises:
a plurality of coil springs disposed in front-rear directions;
an upper plate member configured to support upper ends of the plurality of coil springs and coupled to the driving member; and
a frame member configured to support lower ends of the plurality of coil springs and mounted on the lower leg unit side.

9. The lower limb auxiliary assembly of the wearable robot of claim 8, wherein the frame member accommodates the upper plate member to prevent upward separation of the upper plate member, and has an opening formed to open upward, and both end portions of the opening are formed in a shape preventing separation of an upper surface edge of the upper plate member.

10. The lower limb auxiliary assembly of the wearable robot of claim 1, wherein at least one stopper is provided on at least one side surface of the driving motor of the knee joint driver, and at least one engagement portion, engaging with the stopper according to a rotation angle of the driving member to limit rotation of the driving member, is provided on the driving member.

11. The lower limb auxiliary assembly of the wearable robot of claim 10, wherein the stopper is provided at two positions on a side surface of the driving motor, and the engagement portions are respectively provided on an outer circumferential surface and an inner circumferential surface of the driving member.

12. The lower limb auxiliary assembly of the wearable robot of claim 1, wherein one of the stoppers is configured as a stopping block made of metal material, and the other stopper is configured as a stopping member made of soft material.

13. The lower limb auxiliary assembly of the wearable robot of claim 1, wherein the engagement portion comprises:
an engagement block mounted on the driving member; and
a gas damper mounted on the engagement block, and
wherein a support end of the gas damper is supported by the stopper.

14. The lower limb auxiliary assembly of the wearable robot of claim 1, further comprising:
a hip joint driver mounted on an upper end of the upper leg unit to rotationally drive the upper leg unit; and
a foot unit mounted on a lower end of the lower leg unit to support a wearer's foot.

15. A wearable robot, comprising:
a pair of lower limb auxiliary assemblies of claim 1 to 14; and
a pair of pelvic units, on which the pair of lower limb brace assemblies are respectively mounted, the pelvic units being mounted to surround a wearer's waist region, and extending to a wearer's lateral hip joint region.
